# EUROPEAN PATENT SPECIFICATION

(11) **EP 2 174 300 B1**
(45) Date of publication and mention of the grant of the patent: **07.03.2018**
(21) Application number: 08785461.8
(22) Date of filing: 08.08.2008
(51) Int. Cl.: G06T 17/00

(54) **UNSUPERVISED EXTRACTION OF COMPONENTS BY FEATURE ANALYSIS FOR A PARTS-BASED DESIGN OPTIMISATION OF PHYSICAL BODIES**
NICHT ÜBERWACHTE ENTNAHME VON KOMPONENTEN DURCH MERKMALSANALYSE FÜR EINE ENTWURFSOPTIMIERUNG PHYSISCHER KÖRPER AUF TEILEBASIS
EXTRACTION NON SUPERVISÉE DE COMPOSANTS PAR ANALYSE DE CARACTÉRISTIQUES POUR UNE OPTIMISATION DE DESSIN DE CORPS PHYSIQUES À BASE DE PARTIES

(30) Priority: 10.08.2007 EP 07015789
(43) Date of publication of application: 14.04.2010
(73) Proprietor: Honda Research Institute Europe GmbH, 63073 Offenbach/Main (DE)
(72) Inventor: MENZEL, Stefan, 63303 Dreieich (DE); WERSING, Heiko, 60318 Frankfurt (DE); HASLER, Stephan, 63110 Rodgau (DE); GRAENING, Lars, 99423 Weimar (DE)
(74) Representative: Rupp, Christian
(86) International application number: PCT/EP2008/006567
(87) International publication number: WO 2009/021693

(56) References cited:
- PATRIK O. HOYER: "Non-negative Matrix Factorization with Sparseness Constraints" JOURNAL OF MACHINE LEARNING RESEARCH, 2004, pages 1457-1469, XP002508779
- HELIN DUTAGACI, BULENT SANKUR, YUCEL YEMEZ: "A comparison of data representation types" EUSIPCO 2006, 2006, pages 1-5, XP002508780 Florence, Italy
- ZDRAVKO BOZAKOV ET AL: "Unsupervised extraction of design components for a 3D parts-based representation" NEURAL NETWORKS, 2008. IJCNN 2008. (IEEE WORLD CONGRESS ON COMPUTATIONAL INTELLIGENCE). IEEE INTERNATIONAL JOINT CONFERENCE ON, IEEE, PISCATAWAY, NJ, USA, 1 June 2008 (2008-06-01), pages 2009-2016, XP031327810 ISBN: 978-1-4244-1820-6

## Description

The background of the invention is the field of design optimization, which is to be understood as optimizing a representation of a real-world body in view of objectives which can be expressed in physical entities (drag, pressure,...). The representation encodes the real-world body in a manner compatible with electronic computing units, e.g. via spline coding. The result of the optimization is an optimized representation of the design, which can then be used as a building plan for the optimized real-world body.

The invention is motivated by the needs for a modular database in a Free Style Deformation (FSD) optimisation framework. Yet, the invention offers a general concept and is applicable in a general sense for setting up parts-based representations for designs, a design being a model of a real-world physical body such as e.g. aerodynamically optimized bodies (wings, turbine blades etc.).

Nevertheless, the invention will be presented with respect to an application in the FSD environment. More detailed information on the concept and the technique of FSD is found in the enclosed Appendix A.

### Background

Design optimisations which integrate deformation algorithms, such as Free Form Deformation (FFD), for geometric modifications are usually constrained by the choice of the initial geometry (cf. Appendix A). Such optimisations allow no real structural changes, e.g. by inserting holes or edges, or dividing one geometric component into two. This limits the optimisation algorithm to find only a local maximum/minimum in a subregion of the complete search space, the subregion in which the initial geometry was originally located. Secondly, the order of the control points which are the parameters for the optimisation algorithm gets often invalid if the design is close to a local optimum.

It is the object of the invention to overcome these drawbacks.

To overcome these disadvantages the invention proposes the possibility to exchange (parts of) the geometry during optimisation run in an intelligent way to achieve a higher degree of flexibility. In the present framework the alternatives for whole geometries or parts of it will be referred to as "modules". This framework combining FFD with modular exchanges will be called "Free Style Deformation" (FSD). Additionally, as a result of the exchange the control points are reorganized and allow further modifications of the design. Thus, a design is defined by a tag for the modules it consists of plus a deformation term.

The invention, to this regard, proposes a method for the optimization of real-world bodies, comprising the steps of:
- providing geometry modules according to a method according to any of the preceding claims,
- encoding a real-world body in a design representation,
- running an algorithm in order to optimize the simulated performance of the design representation until a stop criterion is met,
- using the optimized design representation for building an optimized real-world body,
- wherein during the run of the algorithm, the geometry modules are used for the exchange of parts of the geometry of the design representation.

Thereby the geometry parts are extracted from a database of given designs by a method comprising the steps of:
- collecting existing design data and, if available, their performance in a database
- transforming geometries into voxel space
- performing a computational algorithm to extract features
- reconstruct the geometry parts/modules from the extracted features and assign their extracted performance features to them.
The present invention is defined by means of the features of the independent claims. The dependent claims develop further the central idea of the present invention.

Further features, objects and advantages of the invention will now be explained with reference to the figures of the enclosed drawings.
Figure 1 shows examples for shapes in a design database.
Figure 2 illustrates the transformation of a design in the voxel space,
Figure 3 shows a face reconstruction using the so-called nmf technique,
Figure 4 shows a simple sample turbine voxel
Figure 5 shows a flowchart of the method of the present invention, and
Figure 6 shows an aircraft wing design and its flow field.

Generally the invention offers an optimization of real world bodies, comprising the steps of:
- providing geometry modules from a database,
- encoding a real-world body in a design representation,
- running an algorithm in order to optimize the simulated performance of the design representation until a stop criterion is met,
- using the optimized design representation for building an optimized real-world body.
During the run of the algorithm, the geometry modules are used for the exchange of parts of the geometry of the design representation.

The question arises in which way the module database is generated which the optimization algorithm (e.g. FSD) can access for the exchange of parts of the geometry of the design representation.

One can think of two possible ways. On the one hand the module is generated manually, i.e. the designer is analyzing the current geometry which the optimisation has developed so far and thinks of a proper module to replace the current one, which is then drawn by hand. This process is slow and requires human expert knowledge on the given task. On the other hand the modules are extracted from past data, i.e. all already existing geometries are analyzed by a computational algorithm to find the required modules. In literature van den Berg [Berg2002] categorises the process of this so-called feature recognition in four groups: rule-based, graph-based, volume decomposition and geometric reasoning methods. All these methods need human interaction and/or human expert knowledge for applying these methods, by e.g. defining rules or directly the features to look for.

The invention proposes an alternative solution for the second possibility which does not require human knowledge but is purely based on a computational algorithm. Our proposed invention focuses on an *unsupervised* extraction of design features from a design database to form a parts-based representation of geometries. The invention encompasses two approaches, the first one is applied purely on geometric data, while the second one will also include the performance of the design.

### Feature extraction based on geometric shapes

### Concept for the extraction of design features

Assuming a database is given containing a set of designs which have been created to solve a specific task, e.g. aircraft wings or turbines. These designs may originate from any kind of source, e.g. former optimisation runs, experimental tests or conceptual work.

The task is to apply a data analysis algorithm which extracts modules from these geometries in such a way that it is possible to reconstruct the whole database of designs with a minimal error. These modules form a lower dimensional representation of the geometries given in the database. Our requirement towards the extraction method is to result in a parts-based representation which provides a certain hierarchy to switch between different resolution levels. The method which we propose is valid for the two-dimensional space as well as for the three-dimensional space.

In general the method of the present invention comprises the following steps:
1. Data pre-processing: Transfer all (triangulated) geometries into voxel space
2. Data gathering: Collect all data in one matrix V
3. Data analysis: Perform non-negative matrix factorization methods on the matrix V to get two matrices W and H containing base vectors and coefficients.
4. Module reconstruction: Reconstruct the modules from the extracted features stored in matrix W

### An illustrating application example: The turbine test scenario

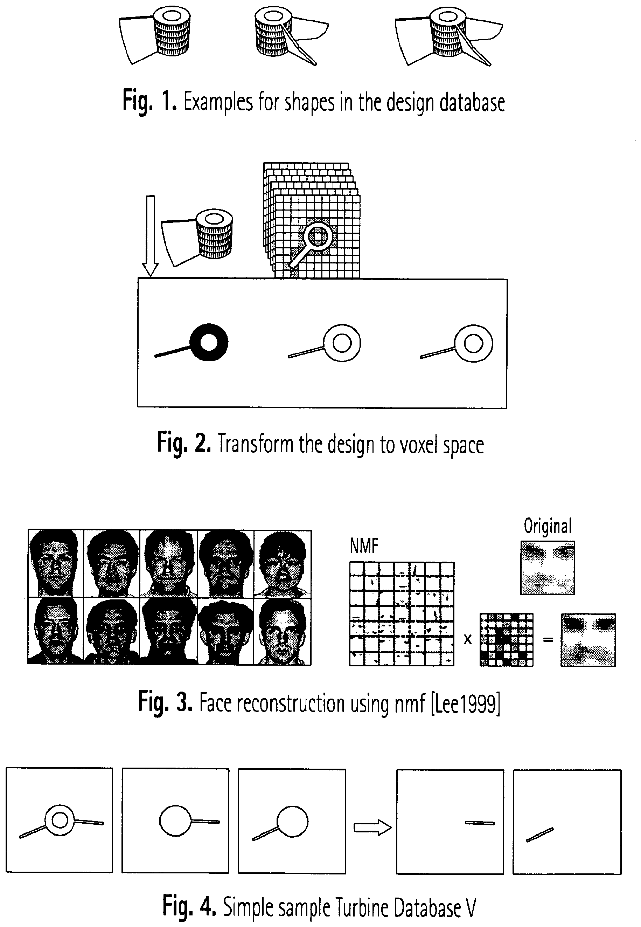

To illustrate the invention it is assumed the existence of a database containing a large number of different shaped turbines as a test scenario. As stated above the source of the designs can be from different design areas but for the case of simplicity we assume that all turbines are available in the same format which is a triangulated format (STL-format) in the present case. The database contains a large number of turbines with a different number of wings and different shaped wings. Some examples are depicted in figure 1.

### Step 1: Data pre-processing

The method to extract modules from this database falls into several steps as mentioned above. At first the designs are recalculated in voxel space, i.e. the geometry is embedded in a cuboid which is sub-sampled by a specified number of boxes. Generally, the shape of the body in which the design is embedded may vary depending on the problem and is not restricted to cuboids.

In figure 2 this process is depicted for the turbine test scenario. A cubic volume has been generated with 400 x 400 x 40 voxels and each turbine representation from the database is embedded within this volume. It is checked for all voxels if a voxel is crossed by the design. If the design crosses a voxel, this voxel is set to 1 (white), if not it is set to 0 (black). The result is visualized by a black/white image (only 3 of 40 slices are shown) . If the file format differs to STL it should be generally possible to perform this step.

Additionally, the voxel space allows a perfect method for scaling the resolution of the analyzed objects by choosing different dimensions of a voxel. As a consequence a hierarchy is applicable to this method. This allows to perform the feature extraction on large-scale geometries as well as on low-scale geometries and to adjust the method to the resolution which is required to solve a given task.

### Step 2: Data gathering

In the next step each image is transferred into a vector with the size of the sum of all voxels, i.e. 6400000 for the turbine test scenario. The vectors of each design are gathered in one large matrix which number of rows equals the number of voxels and the number of columns equals the number of data samples. To reduce the calculation time of the algorithms it is also possible to mask out all voxels which are always black or white in all images. This reduces the size of the matrix drastically, and can be thought of introducing an additional basic module reflecting the similarities among all designs, while the other modules then learn the relevant individual properties of one or more designs.

### Step 3: Data analysis

To summarize, the result of the step described above is a matrix V which contains all geometries described in voxels. For analyzing the designs, algorithms are now applied which calculate a lower number of representative parts of the geometry which allow a reconstruction of the database with a minimal error. The most general algorithm which is considered for this calculation is the non-negative matrix factorization (nmf) which calculates such a parts-based representation. The task is to find an approximate factorization for *V = WH.* The matrix V contains all data samples. As a result of the algorithm W contains the features and H the coefficients. Therefore, the following has to be solved [Lee1999], [Lee2001]:
Minimize ∥*V* - *WH*∥² with respect to W and H, subject to the constraints W, H ≥ 0.

Several iterative approaches have been developed in the past to solve this task. One disadvantage of these approaches is the possible convergence in a local optimum. Since the algorithm is usually randomly initialized a convergence to a global optimum is not guaranteed but nevertheless the algorithm provides good results if it is well tuned to the application.

There exist also several variants and developments of this method which can be alternatively applied, e.g. an nmf with an orthogonality constraint on the base vectors, in this way decreasing their mutual overlap, or an nmf with sparseness constraints on the coefficients, enforcing the use of only few base vectors to reconstruct an individual design. Generally spoken, the choice of the adequate nmf algorithm is problem specific and has to be designed to the task which has to be solved. Two example variants of the nmf are found in [Ding2006], [Pasc2006] but several others exist which are also applicable in our proposed method.

A typical task in which these algorithms are applied is in the field of face recognition and face reconstruction. The database in this case contains a large number of different faces. If the nmf is applied on this data set a parts-based representation W is extracted containing different parts of a face. By multiplying this matrix W and the coefficient matrix H the faces of the database are reconstructed.

Regarding the turbine test scenario the process and the result is illustrated in Figure 4. It will be explained on a subset of the complete turbine data base for reasons of simplicity. In the first step 3 types of turbines have been generated, one with 2 wings and two with one wing at a different position. Based on these geometries from each type 100 designs were generated which provide small random changes on the shape of the wings, while the center cylinder is kept stable throughout all designs. All 300 designs have been transformed to voxels as described in step 1 and collected in one matrix V.

Now one applies an nmf with orthogonality constraints on the base vectors to calculate the matrices W and H. The feature number has been set to 2 and as a result the two features on the right side have been extracted. The inner cylinder is not contained in any of these two features because it is contained in any element of the database and therefore was removed during pre-processing.

So just by these two features or base modules all 300 designs in the database are reconstructable with a very low reconstruction error. It is also worth to notice that the resulting two features are also visually two features which a human would extract if the current task was given to him.

### Step 4: Module reconstruction

As described above the columns of the resulting matrix W now contain the extracted features in voxel notation. The last step is a retransformation into the initial format of the designs or to the format which one would apply to the database to generate the box of modules. This step also requires some intelligent processes if it should be realized automatically. Certainly, one possibility is that a human designer has a look on the design feature and constructs a proper design module by hand. Alternatively, if realized by a computational algorithm, two ways of reconstruction are possible. Firstly, the resulting features are compared to base shapes which are already provided in the desired target format, e.g. rectangular walls, triangular walls, rectangular plates, circles etc., by some shape similarity algorithm. The base shapes which match the features best are considered for the module box. Additionally, deformation methods, such as FFD, are applied on the base shapes to increase the flexibility and the similarity of the base shapes. Secondly, it is also possible to scan the original design database for a geometry which is most similar to the found feature. Based on this geometry the part of the design is extracted which contains the feature.

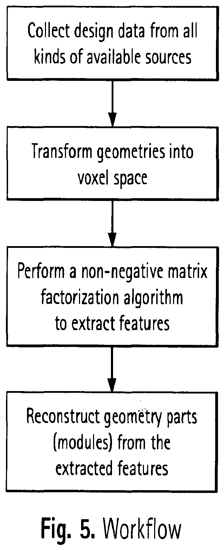

As a result of step 1-4 a database of representative modules in the format of the original database is achieved which allow the application in a modular design development. As stated above, this development may be a manual process or a computational optimisation process, such as FSD. The workflow to extract the modules is sketched in figure 5.

### Part II: Feature extraction based on geometric shapes and the performance of a design

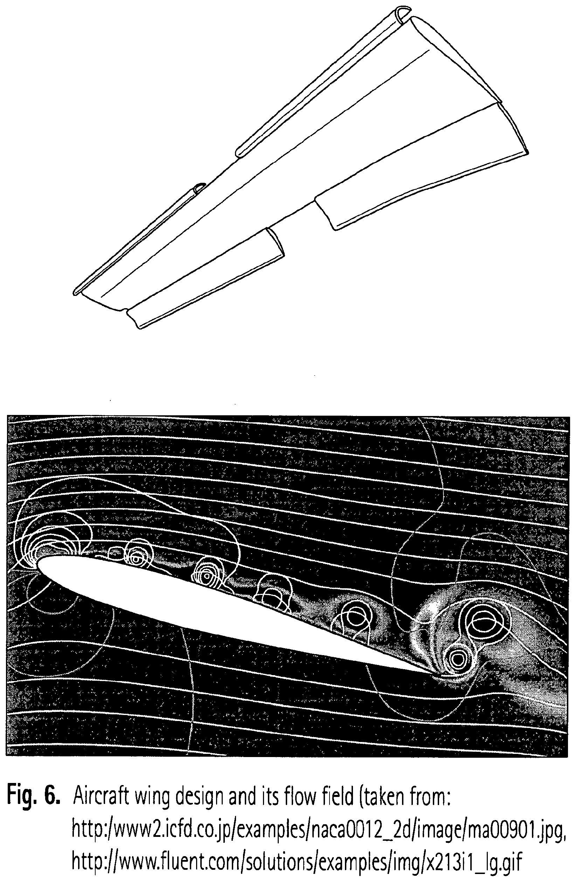

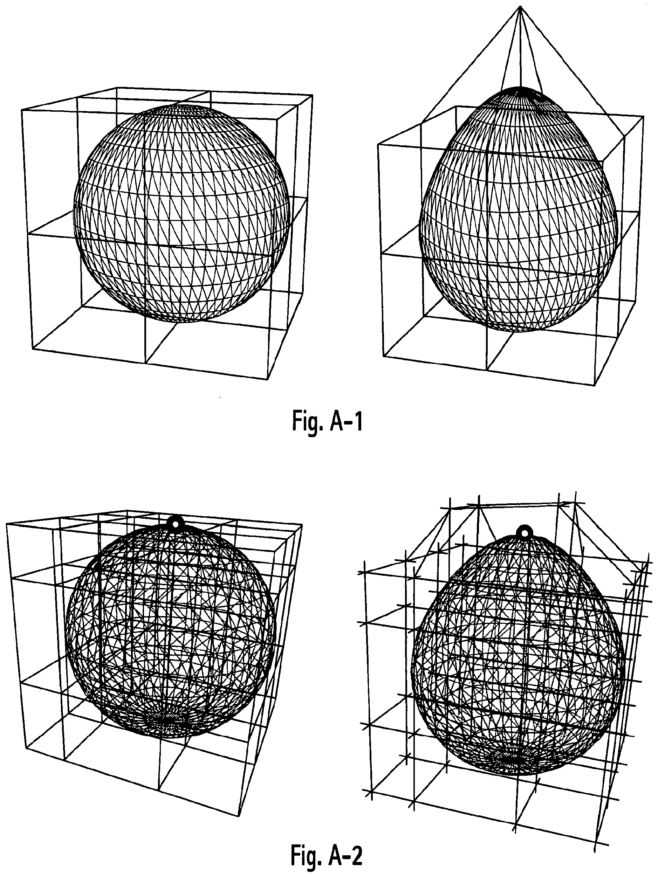

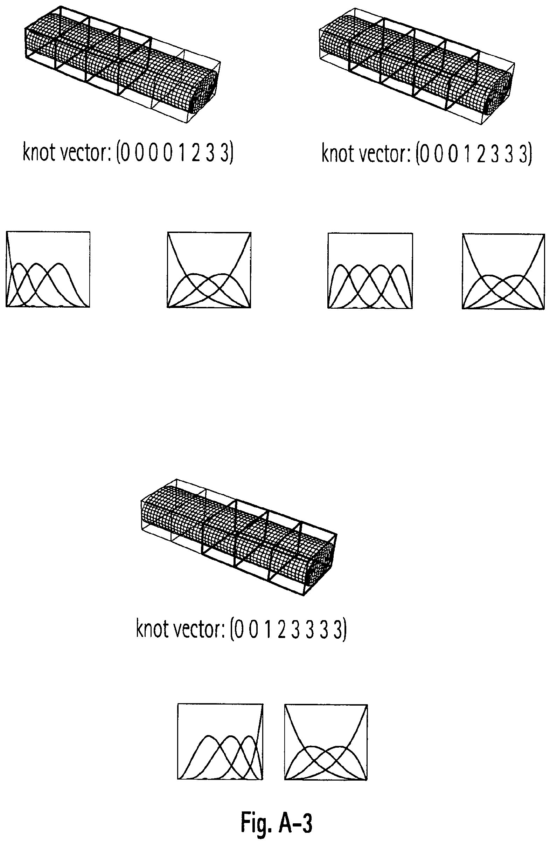

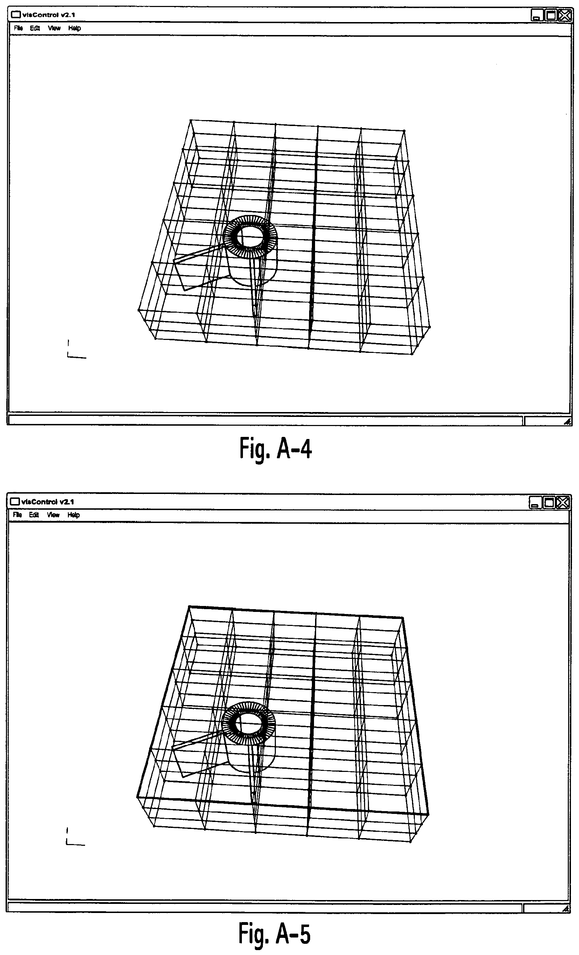

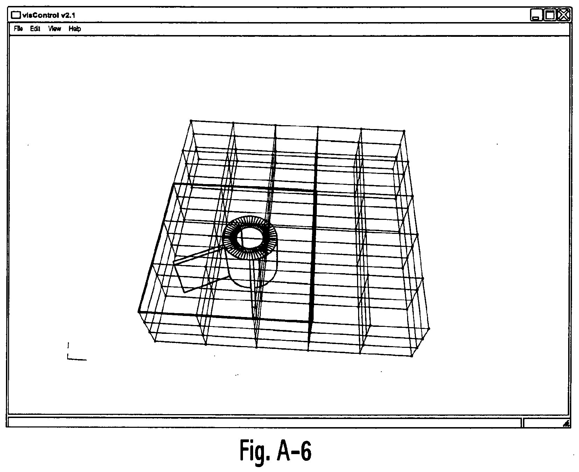

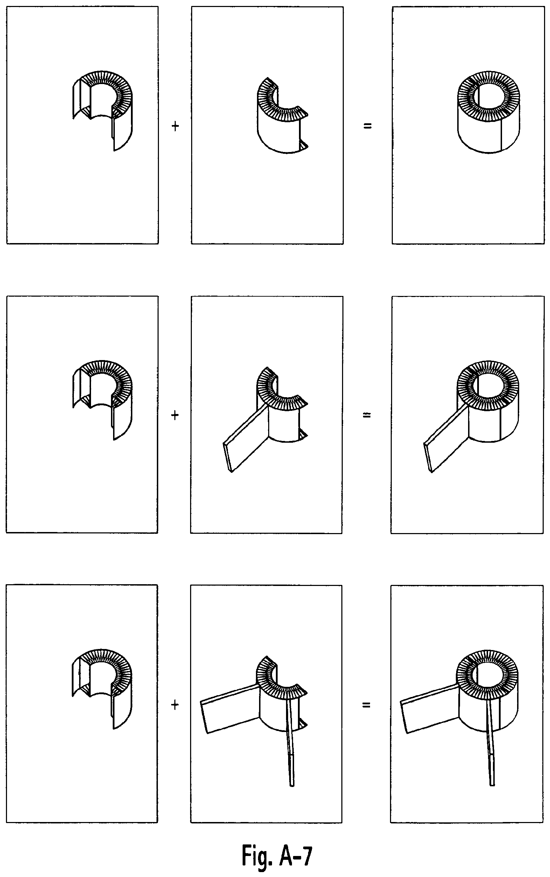

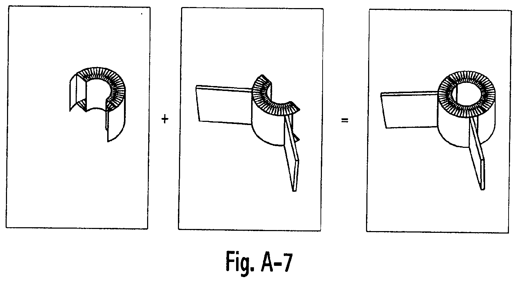

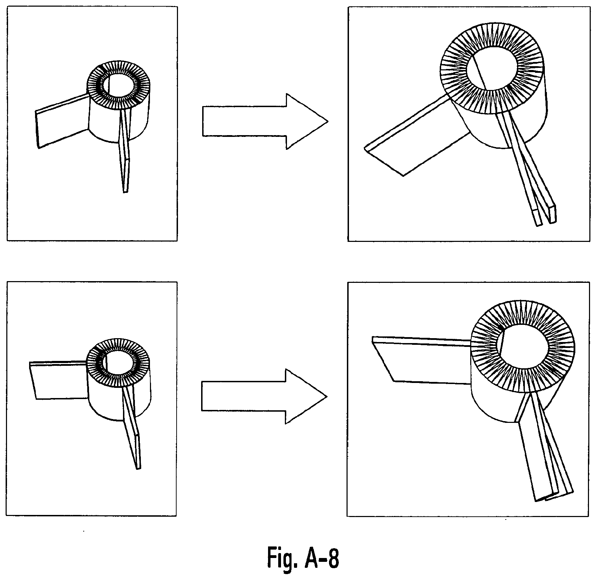

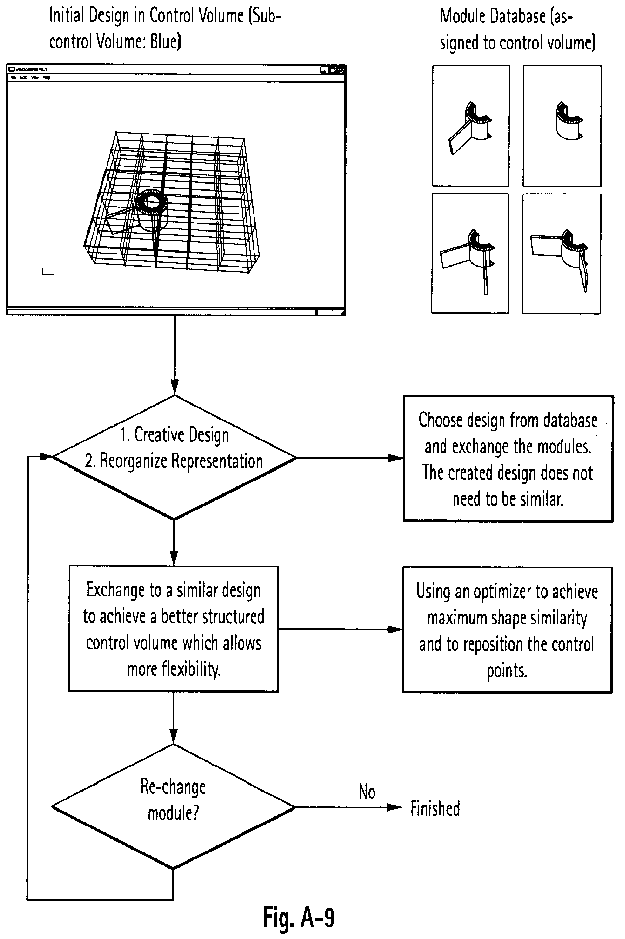

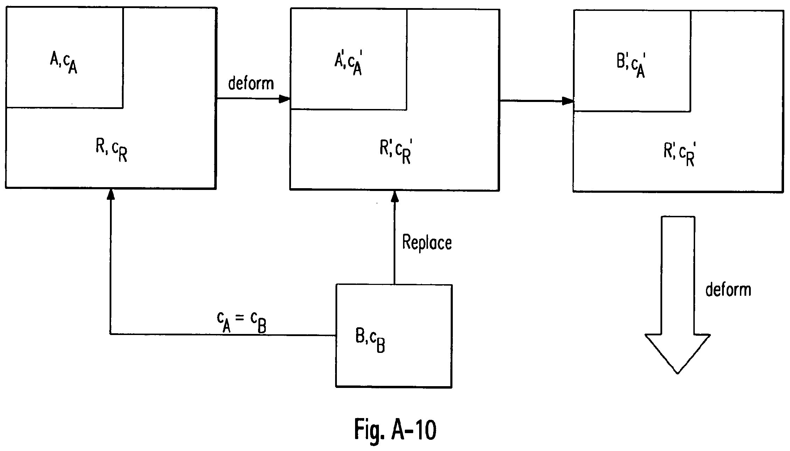

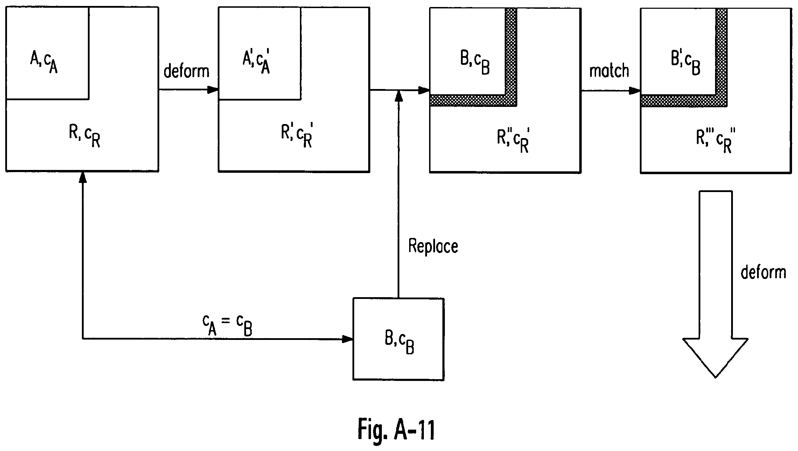

An extension to the method described above is the inclusion of the performances of the designs into the feature extraction method. This extension targets to discover relationships between parts of a design and its performance characteristics. As a consequence each part of the design, i.e. each module, is assigned a certain functionality and quality. As an example one may think of an aerodynamic design, e.g. a wing. Let us assume as example that in the design database not only the designs are collected but additionally each in combination with its flow field which results from a Computational Fluid Dynamics (CFD) simulation. The flow field is defined by a certain flow characteristic, e.g. pressure, velocity etc visualized in an image. An example is depicted in figure 6 taken from: http://www2.icfd.co.jp/examples/naca0012_2d/image/ma00901. jpg,
http://www.fluent.com/solutions/examples/img/x213i1_lg.gif

In the following the steps according to part I are applied. At first each design is transferred to voxel space as described above. Now for each design the performance of interest is also stored in a vector, e.g. if one would like to find a relationship between a part of a wing and the pressures in the middle section of the wing, each pixel of the pressure image is added to the vector which already contains the design. Certainly, the flow characteristics may also be stored directly in this vector since the space is already discrete because of the CFD grid which is required for solving the flow equations.

Similar to step 2 all data is gathered in one matrix V. Each column contains one data sample. The number of rows is defined by the number of voxels of each design plus the number of image pixels or grid cells. As in step 3 a data analysis algorithm is applied which is able to extract features, so e.g. the standard non-negative matrix factorization algorithm or one of its extensions. As a result parts of the designs are extracted which additionally include information on the performance, so in the present case on the flow field. By this method e.g. a vortex directly behind the wing is associated with a special characteristic of the rear part of the wing. As a consequence relationships between design characteristics and performance characteristics are extracted.

As it is conclusive to understand the method is the same as described in part I but the information which are extracted are on a higher level. In an optimisation these information are available. Thus it is possible to exchange parts which are not only similar from the point of shape but furthermore similar with respect to performance characteristics.

### Appendix A: Free Style Deformation (FSD) (taken from the patent)

In this appendix we introduce the techniques of Free Style Deformation (FSD) which extend standard Free Form Deformation (FFD) methods by the exchange of modules to achieve a high degree of structural flexibility including topological changes in the represented structures.

There are mainly two typical problems while dealing with FFD which we want to address with the presented idea:
1. By FFD it is only possible to deform a design which has to be given initially, i.e. the possible shape modifications are limited by the design which was initially chosen to be deformed. Conceptual or structural changes are very difficult to achieve. E.g. the introduction of holes or edges is not possible or requires a huge modification of the control points. Additionally, this process is very difficult and even impossible while dealing with designs which are not allowed to include holes in the represented space. This problem occurs when FFD is used for deforming systems which are analyzed with computational calculation methods such as Computational Fluid Dynamics (CFD) or Finite Element Methods (FEM) to calculate specific features of the design. If e.g. CFD is applied, a computational grid has to be built according to the given geometry. If now a hole has to be introduced in the design this hole has to be meshed and to be interfaced properly to the existing mesh to provide the grid for a CFD simulation. With standard FFD methods this is not possible without a remeshing procedure which is very time consuming.
   As a consequence, changes in the design are desired which provide structural design changes without holes in the represented space.
2. When FFD is applied the design is modified by moving control points and applying the new control point positions to update the design. A problem often occurs when control points have to be moved quite far to reflect a desired design change. This results in a control point set which is very ill-structured since many control points are quite close to each other. If control points are very close further design modifications are very difficult to achieve without having loops in the geometry. So a reorganisation of the representation, i.e. of the control points, is strongly desired to allow further design modifications.

These problems are solved by Free Style Deformation (FSD) which introduces a modular concept for design modifications with FFD. A module is in this context defined as the geometry which is situated in an FFD sub-control volume. The combination of common FFD techniques and module exchanges promises to be an efficient and highly flexible representation for complex structures. A design is finally defined by a code specifying which sub-control-volumes have to be combined and by the deformations of each control point.

### Basics/Reminder:

### Free Form Deformation (taken from PPSN2006:

Stefan Menzel, Markus Olhofer, and Bernhard Sendhoff (2006). Direct Manipulation of Free Form Deformation in Evolutionary Design Optimisation. In: International Conference on Parallel Problem Solving From Nature (PPSN), edited by T.P. Runarsson et al.. Springer-Verlag, pages 352-361)

FFD techniques have been introduced in the field of computer graphics and computer animation for object manipulation. They have been applied to shape optimisation of aerodynamic problems by Perry et al. and together with evolutionary algorithms by Menzel et al. It has been shown that FFD methods realize a good trade-off between shape flexibility and a low number of parameter which in turn results in a low dimensional search space for the optimisation. Furthermore, it has been demonstrated that the shape deformations defined by the FFD method can equally well be applied to deform a grid for computational fluid dynamics calculations. This way it is possible to omit the manual grid generation even for complex geometries. In many cases, design optimisation of complex shapes only becomes feasible when FFD methods are used for the representation. In the FFD method *deformations* of an initial design are described instead of the geometry itself. Therefore, the number of parameters is independent of the complexity of the shape. It is solely determined by the required flexibility of the deformation.

An FFD system is generally defined by a lattice of control points. A modification of the control point positions results in a deformation of the geometry inside the control volume. For the optimisation it is important to minimize the number of parameters. This is achieved by a proper initialisation of the control volume because the number and position of control points determines the shape flexibility.

The basic idea of the free form deformation is depicted in Fig. 1. The sphere represents the object which is the target of the optimisation. It is embedded in a lattice of control points (CP). Firstly, the coordinates of the object have to be mapped to the coordinates in the spline parameter space, a procedure which is called 'freezing'. If the object is a surface point cloud of the design or a mesh which originates from an aerodynamic computer simulation each grid point has to be converted into spline parameter space to allow the deformations. For this calculation various methods have been proposed, e.g. Newton approximation or similar gradient based method. After freezing the object can be modified by moving a control point to a new position. The new control point positions are the inputs for the spline equations and the updated geometry is calculated. Since *everything* in the control volume is deformed, a grid from computational fluid dynamics that is attached to the shape is also adapted. Hence, the deformation affects not only the shape of the design but at the same time the grid points of the computational mesh which is needed for the Computational Fluid Dynamics (CFD) evaluations of the proposed designs. The new shape and the corresponding CFD mesh are generated at the same time without the need for an automated or manual re-meshing procedure. This feature significantly reduces the computational costs and allows a high degree of automation. Thus, by applying FFD the grid point coordinates are changed but the grid structure is kept.

One main disadvantage is the sensitivity of the FFD method to the initial placement of the control points. An inappropriate set-up increases the necessary size of the parameter set and therefore the dimensionality of the search space. One of the reasons is for example that the influence of a control point on an object decreases with the distance from the object. Even a small object variation requires a large modification of the control point if the initial distance between object and control point is large (this also violates the strong causality condition that is important in particular for Evolution Strategies). This in turn often modifies other areas of the design space which has to be compensated for by the movement of other control points. Hence, often correlated mutations of control points are necessary for a local change of the object geometry.

To reduce the influence of the initial positions of the control points direct manipulation is introduced as a representation which allows to determine variations directly on the shape. Therefore local deformations of the object depend only on the so called object point.

**Fig. A-1****.** Free Form Deformation. The design is embedded within a lattice of control points. The modification of control points affects the shape as well as everything else inside the control volume.

### Direct Manipulation of Free Form Deformation (taken from PPSN2006 paper, see above)

Direct manipulation of free form deformations is an extension to the standard FFD. Instead of moving control points (CP), whose influence on the shape is not always intuitive, the designer is encouraged to modify the shape directly by specifying so called object points (OP).

Although the initial setup of the control volume is similar to FFD, the control volume becomes invisible to the user and necessary correlated modifications are calculated analytically. In a first step, a lattice of control points has to be constructed and the coordinates of the object and the CFD mesh have to be frozen. But the control volume can be arbitrary, i.e., the number and positions of control points do not need to have any logical relationship to the embedded object, besides the fact that the number of control points determines the degree of freedom for the modification. In the next step, the designer specifies object points, which define handles to the represented object that can be repositioned. The shape is modified by *directly* changing the positions of these object points. The control points are determined analytically so that the shape variations (induced by the object point variations) are realized by the deformations associated with the new control point positions. In other words, the control points are calculated in such a way that the object points meet the given new positions under the constraint of minimal movement of the control points in a least square sense. Of course the object variations must be realizable by the deformations from the calculated new control point positions, i.e., if the number of control points is too small, some variations given by new object point positions might not be representable by a deformation.

In Fig. 2 an object point has been specified at the top of the sphere. The designer is able to move this object point upwards without any knowledge of the "underlying" control volume which can be initialized arbitrarily. The direct manipulation algorithm calculates the corresponding positions of the control points to mimic the targeted object point movement. The solution is shown in Fig. 2.

Direct manipulation of free form deformation has several advantages when combined with evolutionary optimization as compared to standard FFD. The construction of the control volume and the number and distribution of control points are not as important as in standard FFD. Furthermore, the number of optimisation parameters equals the number of object points.

**Fig. A-2****.** Direct Manipulation of Free Form Deformations. The object point is chosen directly on the surface and the required movements of the control points to realize the target movement of the object point are calculated e.g. by the least squares method. The dotted control volume is invisible to the designer as s/he works directly on the object points; the control volume can be chosen arbitrarily

### New Idea: Free Style Deformation (FSD)

### A modular framework for a general graphical system

This section describes the idea of FSD. Since the general concepts of FFD have already been explained above, in the following the important features of this representation are addressed which allow the set up of a modular FFD framework.

A feature which is very important for the idea of exchanging modules is the underlying spline mathematics, which is important for the determination of the parameters in spline parameter space and the deformations. For further explanations a spline degree of 3 is considered but the method can be applied to other spline degrees in the same way. The method is also not only valid for two dimensions but also for other dimensions. Additionally the method is explained for control volumes defined by B-Splines but the method can be extended to other spline types, e.g. H-Splines, T-Splines,...

Because of the B-splines a lattice of control points can be subdivided for a spline degree of 3 into smaller 4 x 4 squares (in three dimensions a 4 x 4 x 4 cubes), each one is responsible for the mathematics of a smaller part of the whole system. This 'local' feature allows perfectly the exchange of one (or more) of these squares (cubes) as long as the interfaces are kept. Since every sub-control-volume is responsible for the modifications of only a part of the geometry, an exchange of such a sub-volume would only affect the geometry within this sub control volume. The affected geometry is identified by the frozen s, t, u coordinates in spline parameter space which are assigned to the specified sub-control-volume.

The term "to keep the interfaces" is interpreted in two ways. Lets assign the module which is chosen to be exchanged the letter A and the module which is chosen for insertion the letter B:
On the one hand it is essential that the structure of the sub-control-volume of A and of B is identical, i.e. the number of control points and the knot vectors of A and B have to be identical. This statement is true for both, the usage of clamped and unclamped splines in the sub-control-volumes.

On the other hand the initial boundary coordinates of the part of the geometry which is assigned to A and of the geometry which is assigned to B should be the same to guarantee a smooth geometry transition. Since if a geometry has initially smooth transitions with both modules A and B it will also provide smoothness when these modules are exchanged and deformations are applied.

But whereas the first criterion is a requirement for the workability of the proposed framework, the second one is not obligatory but a suggestion to produce geometries which do not have any sudden cracks but keep smoothness.

In our proposed method we will exchange one (or more) of these squares (cubes) and apply the deformations on the new modules to achieve real structural flexibility.

**Fig. A-3****.** Illustration of the spline mathematics. For a spline degree of 3, cubes consisting of 4 x 4 x 4 control points are responsible for the calculation of the geometry in spline parameter space. Each cube is responsible for a small part of the geometry.

This feature enables the designer to exchange one or more of these sub-control volumes and directly apply given deformations to the reconstructed design containing the new modules. The only constraint is that the local structure of the control volume is the same for all modules.

For further illustration of the preparation a cylinder which is depicted in figure 4 is considered. To achieve the module flexibility it is necessary to build the geometries and to calculate their coordinates in spline parameter space. So at first the whole geometry is embedded in the control volume which is adapted to the geometry. In the present case a 6 x 6 x 4 control volume is chosen for simplicity. Fig. 5 illustrates the overall control volume. As described above during the freezing process sub-control volumes are considered, each one is responsible for a smaller part of the geometry. In Figure 6 it can be seen that the blue marked sub-control volume is responsible for the red marked part of the geometry whereas the other sub-control volumes are responsible for the grey marked part of the geometry.

**Fig. A-4****.** A cylinder with two wings in a 6 x 6 x 4 control volume.

**Fig. A-5****.** The 6 x 6 x 4 control volume.

**Fig. A-6****.** The 4 x 4 x 4 sub-control volume A which will be responsible for the red marked region in spline parameter space, i.e. the red part of the geometry is assigned to the sub-control-volume A. The grey part is frozen by the other sub-control volumes.

This preparation phase has to be done for all different modules which are possible to be exchanged to form new geometries during the design or optimisation process. Figure 7 illustrates different kinds of geometry modules which have been frozen in the same way as described above to the control volume. These modules can be combined with the "base" module (the initial upper part of the cylinder) to produce structural different kinds of geometries.

### Modules

**Fig. A-7****.** Different modules (colomn 2) are combined with a "base" module (colomn 1) to construct different types of geometries (colomn 3).

Additionally to this recombination effect the deformation takes place on the geometry. In the same way as in the "normal" FFD control points are modified and the deformation is applied (shown in figure 8). The new proposed method considers both: module exchange and deformation for a high degree of shape flexibility.

**Fig. A-8****.** Deformation of the geometries 3 and 4. After construction of the geometry by combining all sub-control volumes the geometries can be deformed by the same modifications on the control points. Just for clarification: In the right picture the grey geometry is the initial one and the red one is the deformed one.

An example framework for working with FSD can be described as follows: Firstly, different geometries are frozen to a control volume and the sub-control-volumes respectively (Fig. 4 to 6). In the next step an initial geometry is built from a set of modules as starting point. By a modification of the control points the geometry is deformed. At some point of time it can occur that a desired deformation can not be realized because of control points which are very densely distributed or the designer would like to realize a conceptual change. If further deformations shall be performed a module has to be exchanged.

This module exchange can be realized in different ways:
I. Selection of the modules A and B to be exchanged:
   - The modules can be chosen manually: The designer selects a module A or modules A which are about to be exchanged. Then he picks a module B which reflects his imagination of deformation and exchanges the modules.
   - The modules can be chosen with a computational method: Alternatively the designer can select a module A for replacement and let a computational algorithm decide which module B from a given database is the best choice for replacement. This algorithm can be based e.g. on shape similarity analysis, i.e. the algorithm tries to find a module B in the database which is the most similar to the current deformed one and suggests it for exchange.
II. Exchanging the modules and building the new assembly
   - Non-neutral exchange: After the modules A and B are determined, module A is exchanged with module B. Since the current control point positions are directly applied the geometry is deformed and because initial module B differed from initial module A the new geometry is different from the one before the module has been exchanged.
   - Neutral exchange: After the modules A and B are determined, module A is exchanged with module B. Since the current control point positions are directly applied the geometry is deformed and because initial module B differs from the initial module A the new geometry is different from the one before the module has been exchanged. To "repair" the design in such a way that the geometry after the exchange equals the one before exchange an optimisation can be performed. During this process the control point positions are optimized in such a way that the design using the module B is as close as possible to the design before the exchange using module A.

After the module exchange has taken place, the deformation process can be resumed.

The database of geometry modules itself can be extended at any time. So if an adequate geometry module is not within the database the part of the geometry which is about to be inserted is designed manually. After this process the design is embedded in the sub-control-volume and frozen to it. The big advantage of an existing database is that the mapping from coordinates in cartesian space to coordinates in parameter space is already done. Therefore the exchange process is very fast since no freezing has to be done.

Summarizing there are two main features which are achieved by using Free Style Deformation (FSD):
1. Creative Design: After modifying the initial design, two modules are exchanged which are chosen manually or by a computer software. When the new module is inserted, the already performed deformations are applied to the new module and the new shape is calculated. This design can now be kept for further deformations or the module can be exchanged again. It is worth to notice that there is no knowledge on how the new design will look like before exchange since the deformation take immediately place and modify the new module.
2. Reorganisation of the representation: By exchanging the module which evolved by control point modifications to a similar design which did not undergo any deformations so far, the representation is reorganized because the control points are better distributed. The interesting feature is that the designer does not need to care for the representation. A computational algorithm can select the adequate design and optimize the shape so that it fits as close as possible to the design before the exchange happened. This will result in a better distribution of control points which allows the designer more freedom on the design.

In both cases real structural changes can be achieved since the module exchange can also include the integration of holes or edges in the design. Now flow charts are given to illustrate the module exchange process.

### Flow Chart to illustrate the module exchange

### 1. Creative Design, Detailed Flow Chart

∘ A defines the module to be exchanged, c_{A} are the current control point positions assigned to module A
∘ R defines the remaining geometry, c_{R} are the current control point positions assigned to the geometry R
∘ '- the symbol' describes a modified design from its base design, i.e. A' is a modified design based on A, its control points are called c_{A}
Note: B' ≠ B ≠ A'

Process Description: The design built from A and R is deformed to A' and R', c_{A}' and c_{R}'. A module B is chosen for replacing A'. This design is inserted and the control point positions c_{A}' are applied which results in a deformed design B'.

Advantages:
- large variations - even apriori unknown
- unchanged R' after module exchange
- c_{A}' are unchanged but search direction is different due to different B' ∩ R'.
This helps to escape local minima.

### 2. Reorganize representation

∘ A defines the module to be exchanged, c_{A} are the current control point positions assigned to module A
∘ R defines the remaining geometry, c_{R} are the current control point positions assigned to the geometry R
∘ '- the symbol' describes a modified design from its base design, i.e. A' is a modified design based on A, its control points are called c_{A}', analogue A" is a modified design based on A'

Process Description: The design built from A and R is deformed to A' and R', c_{A}' and c_{R}'. A module B is chosen for replacing A'. This design is inserted and the control point positions c_{B} are applied which results in an non-deformed design B, but a different remaining geometry R" since some control points of the module B may have an influence on R'. Next a matching can be applied. On the one hand to achieve a neutral insertion the control points can be optimized in such a way that the geometry built from B ∩ R" is as close as possible to A' ∩ R'. This will result in a geometry B' ∩ R''' defined by the optimized control point positions c_{B}' and c_{R}". On the other hand the matching process can be driven by only a partial match so that the geometry defined in A' is a part of the geometry defined in B.

Advantages:
- c_{B}' are better organised as c_{A}' and allow more flexibility on the design This helps to escape local minima.
- if the matching is applied B' ∩ R'" are close to A' ∩ R' but the control points are better distributed

### References

[Berg2002] Van den Berg, E., Bronsvoort, W.F., and Vergeest, J.S.M. Freeform feature modelling: concepts and prospects. Computers in Industry 49 (2002) 217-233.
[Ding2006] Ding, C., Li, T., Peng, W. and Park, H. Orthogonal Nonnegative Matrix Tri-factorizations for Clustering. Proc Int'l Conf. on Knowledge Discovery and Data Mining (KDD 2006), August 2006
[Lee1999] Lee, Daniel D. and Seung, H. Sebastian. Learning the parts of objects by non-negative matrix factorization. Nature, Vol. 401, 1999
[Lee2001] Lee, Daniel D. and Seung, H. Sebastian. Algorithms for non-negative matrix factorization. Adv. Neural Info. Proc. Syst. 13, 556-562 (2001).
[Pasc2006] Pascual-Montano, A., Carazo, J.M., Kochi, K., Lehmann, D. and Pascual-Marqui, R.D. Nonsmooth Nonnegative Matrix Factorization. IEEE Transactions on Pattern Analysis and Machine Intelligence, Vol.28, No. 3, March 2006

## Claims

1. A method for extracting three dimensional object model features from a database of object models with different shapes and reconstructing the object models from the extracted features comprising the steps of:
- collecting existing object models in a database, **characterized by,**
- transforming the object models' shapes into voxel space by embedding an object models' shape in a structure of a specified number of voxel-boxes,
- checking for all voxels if a voxel-box is crossed by the embedded object models' shape,
- identifying crossed voxel-boxes and voxel-boxes that are not crossed by the embedded object models' shape,
- deriving a vector for each embedded object model, the vector's size corresponding to the number of all voxel-boxes, the values corresponding to a set value of the respective voxel which depends on whether the voxel is crossed by the design or not,
- gathering the derived vectors in a matrix
- performing a computational algorithm on said matrix to extract object features, wherein the computational algorithm is a non-negative matrix factorization algorithm with orthogonality constraints on the base vectors generated by the non negative matrix factorization algorithm and sparseness constraints on the base vectors and the coefficients of the coefficient matrix generated by the non-negative matrix factorization algorithm.

2. A method according to claim 1, wherein the design data is given in triangulated shape data, e.g. STL, VRML.

3. A method according to claim 1, wherein the computational algorithm is an unsupervised learning algorithm.

4. A method according to claim 1, wherein the computational algorithm is a standard non-negative matrix factorization algorithm.

5. A method according to claim 1, wherein the computational algorithm is a non-negative matrix factorization algorithm with orthogonality constraints on the base vectors.

6. A method according to claim 1, wherein the computational algorithm is a non-negative matrix factorization algorithm with sparseness constraints on the coefficients.

7. A method according to claim 1, wherein the computational algorithm is a non-negative matrix factorization algorithm with sparseness constraints on the base vectors and the coefficients.

8. A method according to claim 1, wherein the reconstruction is done by a shape similarity analysis between the extracted features and basic shape types, e.g. walls, plates etc.

9. A method according to claim 1, wherein the reconstruction is done by a shape similarity analysis between the extracted features and designs given in the data base, and dividing a similar design according to the extracted feature.

10. A method according to claim 1, wherein the reconstruction is done by a manual reconstruction of the extracted feature in the required design data format, e.g. STL, VRML.

11. A method according to claim 1, wherein:
- collecting existing design data includes collecting their performance in a database, and wherein
- reconstructing the geometry parts/modules from the extracted features includes assigning their extracted performance features to them.

12. A computer program product, implementing a method according to any of the preceding claims when run on a computing device.

## Patentansprüche

1. Verfahren zum Gewinnen von dreidimensionalen Objekt-Modell-Eigenschaften aus einer Datenbank von Objekt-Modellen mit unterschiedlichen Formen und zum Rekonstruieren der Objekt-Modelle aus den gewonnenen Eigenschaften, umfassend die Schritte:
- Sammeln existierender Objekt-Modelle in einer Datenbank,
**gekennzeichnet durch**,
- Transformieren der Objekt-Modell-Formen in einen Gitterpunktraum (voxel space) durch Einbetten einer Objekt-Modell-Form in eine Struktur einer vorgegebenen Anzahl von Gitterzellen,
- Prüfen jedes Gitterpunkts, ob diese Gitterpunktzelle durch die eingebettete Objekt-Modellform gekreuzt wird,
- Identifizieren gekreuzter Gitterzellen und Gitterzellen, die nicht durch die eingebettete Objekt-Modellfonn gekreuzt werden,
- Ableiten eines Vektors für jedes eingebettete Objekt-Modell, wobei die Vektorgröße der Anzahl aller Gitterzellen entspricht, wobei die Werte einem gesetzten Wert des entsprechenden Gitterpunkts entsprechen, der davon abhängt, ob der Gitterpunkt durch das Design gekreuzt wird oder nicht,
- Sammeln der abgeleiteten Vektoren in einer Matrix,
- Durchführen eines Berechnungsalgorithmus an der Matrix, um Objekteigenschaften zu gewinnen, wobei der Berechnungsalgorithmus ein Nicht-negative-Matrix-Faktorisierungsalgorithmus mit Orthogonalitätbedingungen bezüglich der Basisvektoren, die durch den Nicht-negativen-Matrix-Faktorisierungsalgorithmus erzeugt wurden, und Seltenheitsbedingungen bezüglich der Basisvektoren und der Koeffizienten der Koeffizientenmatrix, die durch den Nicht-negative-Matrix-Faktorisierungsalgorithmus erzeugt werden.

2. Verfahren gemäß Anspruch 1, wobei die Designdaten als triangulierte Formdaten gegeben sind, z.B. STL, VRML.

3. Verfahren gemäß Anspruch 1, wobei der Berechnungsalgorithmus ein Unüberwachtes-Lernen-Algorithmus ist (unsupervised learning algorithm).

4. Verfahren gemäß Anspruch 1, wobei der Berechnungsalgorithmus ein Standard-Nicht-Negative- Matrix-Faktorisierungsalgorithmus ist.

5. Verfahren gemäß Anspruch 1, wobei der Berechnungsalgorithmus ein Nicht-Negative-Matrix-Faktorisierungsalgorithmus mit einer Orthogonalitätsbedingung bezüglich der Basisvektoren ist.

6. Verfahren gemäß Anspruch 1, wobei der Berechnungsalgorithmus ein Nicht-Negative-Matrix-Faktorisierungsalgorithmus ist mit Seltenheitsbedingungen bezüglich der Koeffizienten.

7. Verfahren gemäß Anspruch 1, wobei der Berechnungsalgorithmus ein Nicht-Negative-Matrix-Faktorisierungsalgorithmus mit Seltenheitsbedingungen bezüglich der Basisvektoren und der Koeffizienten ist.

8. Verfahren gemäß Anspruch 1, wobei die Rekonstruktion durch eine Analyse einer Formähnlichkeit zwischen den gewonnen Eigenschaften und den Basisformtypen erfolgt, z. B. Wände, Platten, usw.

9. Verfahren gemäß Anspruch 1, wobei die Rekonstruktion durch eine Analyse einer Formähnlichkeit zwischen den gewonnenen Eigenschaften und Ausgestaltungen, die in der Datenbank gegeben sind, und Teilen eines ähnlichen Designs gemäß der gewonnenen Eigenschaft erfolgt.

10. Verfahren gemäß Anspruch 1, wobei die Rekonstruktion durch eine manuelle Rekonstruktion der gewonnenen Daten in dem erforderlichen Ausgestaltungsdatenformat erfolgt, z.B. STL, VRML.

11. Verfahren gemäß Anspruch 1, wobei:
das Sammeln existierender Designdaten das Sammeln deren Leistungsvermögens in einer Datenbank einschließt, und wobei
das Rekonstruieren der Formteile/-module aus den gewonnenen Eigenschaften das Zuordnen ihrer gewonnenen Leistungsvermögenseigenschaften zu ihnen aufweist.

12. Computerprogrammprodukt, das ein Verfahren gemäß irgendeinem der vorangegangenen Ansprüche durchführt, wenn es auf einer Rechenmaschine ausgeführt wird.

## Revendications

1. Procédé d'extraction de caractéristiques de modèles d'objets tridimensionnels à partir d'une base de données de modèles d'objets de différentes formes et pour reconstruire les modèles d'objets à partir des caractéristiques extraites, comprenant les étapes de :
- collecte de modèles d'objets existants dans une base de données,
**caractérisé par** les étapes de
- transformation des formes des modèles d'objets en un espace de voxels en incorporant une forme de modèles d'objets dans une structure d'un nombre spécifié de cubes de voxels,
- vérification de tous les voxels pour voir si un cube de voxel est traversé par la forme de modèles d'objets incorporée,
- identification de cubes de voxels traversés et de cubes de voxels qui ne sont pas traversés par la forme de modèles d'objets incorporée,
- dérivation d'un vecteur pour chaque modèle d'objets incorporé, la taille du vecteur correspondant au nombre de tous les cubes de voxels, les valeurs correspondant à une valeur définie du voxel respectif qui dépend du fait que le voxel est traversé ou non par le dessin,
- la collecte des vecteurs dérivés dans une matrice,
- exécution d'un algorithme de calcul sur la matrice pour extraire des caractéristiques d'objets, dans lequel l'algorithme de calcul est un algorithme de factorisation matricielle non négative avec des contraintes d'orthogonalité sur les vecteurs de base, qui sont générés par l'algorithme de factorisation matricielle non négative, et des contraintes de parcimonie sur les vecteurs de base et sur les coefficients de matrices des coefficients générés par l'algorithme de factorisation matricielle non négative.

2. Procédé selon la revendication 1, dans lequel les données de dessin sont fournies dans des données de formes triangulées, par exemple STL, VRML.

3. Procédé selon la revendication 1, dans lequel l'algorithme de calcul est un algorithme d'apprentissage non supervisé.

4. Procédé selon la revendication 1, dans lequel l'algorithme de calcul est un algorithme standard de factorisation matricielle non négative.

5. Procédé selon la revendication 1, dans lequel l'algorithme de calcul est un algorithme de factorisation matricielle non négative avec des contraintes d'orthogonalité sur les vecteurs de base.

6. Procédé selon la revendication 1, dans lequel l'algorithme de calcul est un algorithme de factorisation matricielle non négative avec des contraintes de parcimonie sur les coefficients.

7. Procédé selon la revendication 1, dans lequel l'algorithme de calcul est un algorithme de factorisation matricielle non négative avec des contraintes de parcimonie sur les vecteurs de base et sur les coefficients.

8. Procédé selon la revendication 1, dans lequel la reconstruction est effectuée par une analyse de similarité de formes entre les caractéristiques extraites et les types de formes de base, par exemple des murs, des panneaux, etc.

9. Procédé selon la revendication 1, dans lequel la reconstruction est effectuée par une analyse de similarité de formes entre les caractéristiques extraites et les dessins fournis dans la base de données, et en divisant un dessin similaire selon la caractéristique extraite.

10. Procédé selon la revendication 1, dans lequel la reconstruction est effectuée par une reconstruction manuelle de la caractéristique extraite dans le format de données de dessin requis, par exemple STL, VRML.

11. Procédé selon la revendication 1, dans lequel :
- la collecte de données de dessin existantes comporte la collecte de leurs performances dans une base de données, et dans lequel
- la reconstruction des parties/modules géométriques à partir des caractéristiques extraites comporte l'attribution à ceux-ci de leurs caractéristiques de performances extraites.

12. Produit programme informatique, mettant en oeuvre un procédé selon l'une quelconque des revendications précédentes lorsqu'il est exécuté sur un dispositif informatique.
